# EUROPÄISCHE PATENTSCHRIFT

(11) **EP 1 305 957 B1**
(45) Veröffentlichungstag und Bekanntmachung des Hinweises auf die Patenterteilung: **02.01.2008**
(21) Anmeldenummer: 01933586.8
(22) Anmeldetag: 05.04.2001
(51) Int. Cl.: H04Q 3/00, H04Q 11/04, H04M 7/00, H04L 12/64

(54) **ANORDNUNG ZUM ANSCHLUSS EINER TELEKOMMUNIKATIONSEINRICHTUNG AN EIN PAKETVERMITTELNDES KOMMUNIKATIONSNETZ**
ARRANGEMENT FOR CONNECTING A TELECOMMUNICATIONS DEVICE TO A PACKET-SWITCHING COMMUNICATIONS NETWORK
SYSTEME PERMETTANT DE CONNECTER UN DISPOSITIF DE TELECOMMUNICATION A UN RESEAU DE COMMUNICATION A COMMUTATION DE PAQUETS

(30) Priorität: 06.04.2000 DE 10017229
(43) Veröffentlichungstag der Anmeldung: 02.05.2003
(73) Patentinhaber: NOKIA SIEMENS NETWORKS GMBH & CO. KG, 81541 München (DE)
(72) Erfinder: BRUMM, Thomas, 82131 Gauting-Königswiesen (DE); KLEINER, Patrick, 81476 München (DE); KLOTZ, Udo, 82061 Neuried (DE); KRESNIK, Robert, 2310 Slovenska Bistrica (SI); LÖBIG, Norbert, 64291 Darmstadt (DE); ROMANSKI, Irena, 82544 Egling (DE); ZINKL, Walter, A-1100 Wien (AT)
(86) Internationale Anmeldenummer: PCT/DE2001/001358
(87) Internationale Veröffentlichungsnummer: WO 2001/078415

(56) Entgegenhaltungen:
- EP-A- 0 851 653
- EP-A- 0 966 145
- DE-U- 29 811 851
- KORPI M ET AL: "SUPPLEMENTARY SERVICES IN THE H.323 IP TELEPHONY NETWORK" IEEE COMMUNICATIONS MAGAZINE, Bd. 37, Nr. 7, Juli 1999 (1999-07), Seiten 118-125, XP000835313 ISSN: 0163-6804
- ITU-T RECOMMENDATION H.450.1 - GENERIC FUNCTIONAL PROTOCOL FOR THE SUPPORT OF SUPPLEMENTARY SERVICES IN H.323, Februar 1998 (1998-02), Seiten 1-21, XP002177452
- ITU-T RECOMMENDATION H.323 - PACKET-BASED MULTIMEDIA COMMUNICATIONS SYSTEMS, September 1999 (1999-09), Seiten 1-129, XP002166480

## Beschreibung

Die Erfindung betrifft eine Anordnung und eine Schnittstelleneinheit zum Anschluss einer Telekommunikationseinrichtung an ein paketvermittelndes Kommunikationsnetz sowie ein Kommunikationsendgerät und eine Nebenstellenanlage zum Anschluss an ein paketvermittelndes Kommunikationsnetz - siehe auch EP-A-0 966 145. Die Anordnung enthält mindestens eine Telekommunikationseinrichtung, die an ein leitungsvermittelndes Kommunikationsnetz anschließbar ist. Mit Hilfe eines paketvermittelnden Kommunikationsnetzes werden Daten zwischen einem ersten und einem zweiten Teilnehmeranschluss des paketvermittelnden Kommunikationsnetzes übertragen.

Es gibt verschiedene Arten von Kommunikationsnetzen, um Sprache, Videodaten und weitere Daten zu übertragen. Durch die verschiedenen Einsatzmöglichkeiten dieser Kommunikationsnetze wurden unterschiedliche Dienste und Leistungsmerkmale für jedes dieser Kommunikationsnetze entwickelt. Konventionelle Kommunikationsnetze zur Sprachübertragung sind im allgemeinen leitungsvermittelnde Kommunikationsnetze und Kommunikationsnetze zur Übertragung von anderen Daten sind üblicherweise paketvermittelnde Kommunikationsnetze, wie z.B. ein lokales Computernetzwerk (Local-Area-Network; LAN) oder das Internet. Jedoch können derzeit Sprach-, Daten- und Videodienste von beiden Kommunikationsnetzarten bereitgestellt werden. So ist es z.B. möglich, einen Teilnehmer über ein paketvermittelndes Kommunikationsnetz mit dem leitungsvermittelnden Kommunikationsnetz zu verbinden. Ergänzende Dienste (Supplementary Services), wie z.B. Rufübernahme, Dreierkonferenz, große Konferenz, Halten, Anzeige von Gebühreninformationen, geschlossene Benutzergruppe, Rufnummernidentifikation, automatischer Rückruf bei besetzt, automatischer Rückruf bei keiner Antwort, Rufsperren, Indikation von wartenden Nachrichten und Anruf weiterleitungen, die in bekannten leitungsvermittelnden Kommunikationsnetzen bereitgestellt werden, können teilweise auch in paketvermittelnden Kommunikationsnetzen genutzt werden. Dazu sind Standards, z.B. in der H.323 basierenden Serie von Empfehlungen der International Telecommunication Union - Telecommunications Standardisation Sector (ITU-T Empfehlung) für paketvermittelnde Kommunikationsnetze definiert. Zu diesen Standards gehören insbesondere die Standards H.323, H.225, H.245 und H.450.

Es ist weiterhin eine H.323-Architektur für ergänzende Dienste bekannt, bei der eine Möglichkeit des Zusammenwirkens der Dienste zwischen leitungsvermittelnden und paketvermittelnden Kommunikationsnetzen besteht. So ist z.B. bekannt, dass nutzkanalbezogene Signalisierungsnachrichten zur Aktivierung, Deaktivierung, Anforderung und Steuerung von Diensten und Leistungsmerkmalen im leitungsvermittelnden Kommunikationsnetz auf Signalisierungspakete abgebildet werden, die im paketvermittelnden Kommunikationsnetz verwendet werden. Vorzugsweise werden im leitungsvermittelnden Kommunikationsnetz sogenannte DSS1-Nachrichten genutzt, die in den ITU-Standards Q.931 und Q.932 definiert sind. Im paketvermittelnden Kommunikationsnetz, insbesondere im Internet, wird zum Übertragen der Signalisierungspakete vorzugsweise das standardisierte H.225-Signalisierungsprotokoll verwendet. Dienst- und Leistungsmerkmale, zu deren Nutzung nutzkanalbezogene Signalisierungsnachrichten benötigt werden, sind z.B. Rufübernahme, Dreier- und große Konferenz, Halten, Anzeigen von Gebühreninformationen, geschlossene Benutzergruppe und die Rufnummernidentifikationsdienste. Für Statusabfragen sowie zur Aktivierung bzw. Deaktivierung von Dienstmerkmalen, wie z.B. Rufumleitung, automatischer Rückruf bei besetzt, automatischer Rückruf bei keiner Antwort, und bei der Indikation von wartenden Nachrichten ist eine nutzverbindungsunabhängige bzw. nutzkanalunabhängige Signalisierung erforderlich.

Zur Sprachübertragung gemäß dem H.323-Standard sind Komponenten, wie z.B. Terminals, Gateway und Gatekeeper vorgesehen und definiert. Terminals sind Endgeräte, die mit dem paketvermittelnden Kommunikationsnetz verbunden sind. Bei paketvermittelnden Kommunikationsnetzen ist es nötig, dass der Teilnehmer sich mit seinem Endgerät anmeldet bzw. einlogged. Ein Gateway dient als Schnittstelle zur Umsetzung der Datenprotokolle zwischen paketvermittelndem Kommunikationsnetz und leitungsvermittelndem Kommunikationsnetz. Ein Gatekeeper dient zur Verwaltung und Kontrolle von Benutzerdiensten und Netzkapazitäten eines paketvermittelnden Kommunikationsnetzes gemäß dem H.323-Standard. Im Gatekeeper erfolgt auch die Adressierung eines ankommenden Anrufes im paketvermittelnden Kommunikationsnetz. Jeder Teilnehmer hat im paketvermittelnden Kommunikationsnetz eine Adresse. Die von einem rufenden Teilnehmer gewählte Telefonnummer wird vom Gatekeeper auf die Adresse des Teilnehmers im paketvermittelnden Kommunikationsnetz umgesetzt. Somit können mit dem H.323-Standard Telefonanrufe im Internet bzw. in auf einem Internetprotokoll basierenden Netzen übertragen werden.

Als Terminals für Sprachverbindungen über ein paketvermittelndes Kommunikationsnetz werden im allgemeinen Personalcomputer mit einer geeigneten Soft- und Hardware genutzt. Jedoch ist diese Art zu telefonieren für die meisten Telefonteilnehmer ungewohnt und unkomfortabel. Auch muss dieser Personalcomputer ständig in Betrieb sein, damit der Teilnehmer erreichbar ist. Weiterhin gibt es sogenannte IP-Telefone, die zum direkten Anschluss an ein Internetprotokoll basierendes Kommunikationsnetz geeignet sind. Diese Geräte sind meist sehr teuer und besitzen häufig nicht den gleichen Funktionsumfang, den Teilnehmer von herkömmlichen analogen und ISDN-Telefonen gewohnt sind. Andere Telekommunikationsendgeräte, die zum Anschluss an ein IP-Kommunikationsnetz geeignet sind, wie z.B. Faxgeräte oder Anrufbeantworter sind nicht bekannt.

Aufgabe der Erfindung ist es daher, eine Anordnung anzugeben, die es mit geringem Aufwand ermöglicht, einem Teilnehmer an einem paketvermittelnden Kommunikationsnetz denselben Kommunikationskomfort bereitzustellen, wie an einem Teilnehmeranschluss eines leitungsvermittelnden Kommunikationsnetzes.

Die Aufgabe wird für eine Anordnung durch die Merkmale des Anspruchs 1 gelöst. Vorteilhafte Weiterbildungen der Erfindung sind in den abhängigen Ansprüchen angegeben.

Mit Hilfe einer Anordnung mit den Merkmalen des Anspruchs 1 können sowohl bekannte Kommunikationsendgeräte, wie z.B. analoge Telefone, ISDN-Telefone, Anrufbeantworter und Faxgeräte sowie Modems, die zum Anschluss an das leitungsvermittelnde Kommunikationsnetz vorgesehen sind, an ein paketvermittelndes Kommunikationsnetz angeschlossen werden. Weiterhin lässt sich mit einer Anordnung mit den Merkmalen des Patentanspruchs 1 eine bekannte Nebenstellenanlage an ein paketvermittelndes Kommunikationsnetz anschließen.

Vorhandene Kommunikationsendgeräte oder Nebenstellenanlagen zum Anschluss an leitungsvermittelnde Kommunikationsnetze können somit auch weiterhin beim Anschluss an ein paketvermittelndes Kommunikationsnetz genutzt werden. Auch sind die Aufwendungen zur Anschaffung von analogen und ISDN-Kommunikationsendeinrichtungen wesentlich geringer als zur Anschaffung eines speziellen IP-Terminals. Oftmals werden als IP-Terminals Personalcomputer mit geeigneter Soft- und Hardware genutzt. Zur Erreichbarkeit des Teilnehmers muss ein solcher Personalcomputer ständig in Betrieb sein. Die Leistungsaufnahme eines Personalcomputers ist im allgemeinen wesentlich höher als die Leistungsaufnahme eines herkömmlichen Kommunikationsendgerätes, wodurch auch die Betriebskosten eines Personalcomputers als IP-Terminal relativ hoch sind. Bei einer Anordnung gemäß Patentanspruch 1 ist die Gesamtleistungsaufnahme der Kommunikationseinrichtung und der Schnittstelleneinheit im allgemeinen wesentlich geringer als die Leistungsaufnahme eines durchschnittlichen Personalcomputers. Dadurch können auch die Betriebskosten verringert werden.

Bei einer vorteilhaften Weiterbildung der Erfindung wandelt die Schnittstelleneinheit Nutzdaten und/oder Signalisierungsdaten, die mit Hilfe des paketvermittelnden Kommunikationsnetzes dem Teilnehmeranschluss zugeführt werden, in Nutz- bzw. Signalisierungsdaten des leitungsvermittelnden Kommunikationsnetzes um und umgekehrt. Somit ist sichergestellt, dass mit Hilfe der Kommunikationseinrichtung sowohl Nutzdaten, z.B. Sprachdaten, mit einem weiteren Teilnehmeranschluss ausgetauscht werden können und Signalisierungsinformationen, z.B. zum Verbindungsaufbau und/oder zum Aktivieren, Deaktivieren und Steuern von Leistungsmerkmalen zwischen der Telekommunikationseinrichtung und dem paketvermittelnden Kommunikationsnetz ausgetauscht werden können.

Es ist vorteilhaft, die Signalisierungsnachrichten des leitungsvermittelnden Kommunikationsnetzes in äquivalente Signalisierungsnachrichten des paketvermittelnden Kommunikationsnetzes zu wandeln und umgekehrt. Diese Wandlung kann z.B. mit Hilfe von in einer Datenbank gespeicherten äquivalenten Signalisierungsnachrichten erfolgen. Mit Hilfe einer solchen Datenbank ist es einfach möglich, Signalisierungsnachrichten des paketvermittelnden Kommunikationsnetzes in Signalisierungsnachrichten des leitungsvermittelnden Kommunikationsnetzes zu konvertieren. Signalisierungsnachrichten, denen keine äquivalente Signalisierungsnachricht zugeordnet ist, können mit Hilfe eines Datenpaketes als Nutzdaten übertragen werden. Dies betrifft insbesondere Signalisierungsnachrichten zum Steuern, Aktivieren und Deaktivieren von Leistungsmerkmalen des leitungsvermittelnden Kommunikationsnetzes, die vom paketvermittelnden Kommunikationsnetz nicht unterstützt werden. Die in den Datenpaketen enthaltenen Signalisierungsinformationen können dann an einen anderen Teilnehmeranschluss oder an einer Schnittstelle des paketvermittelnden Kommunikationsnetzes zu einem leitungsvermittelnden Kommunikationsnetz in Signalisierungsnachrichten des leitungsvermittelnden Kommunikationsnetzes konvertiert werden.

Bei einer vorteilhaften Weiterbildung der Erfindung erzeugt das Schnittstellenprogramm Meldungen, die das paketvermittelnde Kommunikationsnetz und/oder das leitungsvermittelnde Kommunikationsnetz als Rückmeldung auf übermittelte Signalisierungsdaten benötigt. Dadurch wird erreicht, dass jede Signalisierungsnachricht korrekt abgeschlossen wird, auch wenn sie von dem jeweils anderen Kommunikationsnetz nicht unterstützt wird, d.h. wenn das jeweils andere Kommunikationsnetz keine erforderliche Rückmeldung erzeugt. Die Signalisierung, d.h. das jeweilige Signalisierungsprotokoll, kann für das jeweilige Kommunikationsnetz somit korrekt abgeschlossen werden.

Bei einer Ausführungsform der Erfindung dienen die Signalisierungsnachrichten sowohl zum Verbindungsaufbau und zum Verbindungsabbau zwischen dem ersten und dem zweiten Teilnehmer als auch zum Aktivieren, Deaktivieren und/oder Registrieren von mindestens einem Dienstmerkmal, wie z.B. Rufübernahme, Dreierkonferenz, große Konferenz, Halten, Anzeige von Gebühreninformationen, geschlossene Benutzergruppe, Rufnummernidentifikation, automatischer Rückruf bei besetzt, automatischer Rückruf bei keiner Antwort, Rufsperren, Indikation von wartenden Nachrichten und Anrufweiterleitungen. Somit stehen auch einem Teilnehmer an einem Teilnehmeranschluss des paketvermittelnden Kommunikationsnetzes Dienst- und/oder Leistungsmerkmale zur Verfügung, die Teilnehmern von leitungsvermittelnden Kommunikationsnetzen im allgemeinen zur Verfügung stehen.

Bei einer Weiterbildung der Erfindung können die Signalisierungsnachrichten im paketvermittelnden Kommunikationsnetz auch verbindungsunabhängig übertragen werden. Dadurch ist es möglich, dass Dienst- und/oder Leistungsmerkmale, wie z.B. automatischer Rückruf bei besetzt und weitere Dienstmerkmale, die zum Nutzen des Dienstmerkmals keine Verbindung benötigen, einfach bereitgestellt werden können.

Bei einer anderen Weiterbildung sind die Signalisierungsnachrichten des leitungsvermittelnden Kommunikationsnetzes DSS1-Nachrichten, die in den ITU-Standards Q.931 und Q.932 definiert sind. Dadurch ist es möglich, dass ISDN-Telefone einfach angeschlossen werden können und ISDN-Dienstmerkmale und/oder ISDN-Leistungsmerkmale unterstützt werden. Mit Hilfe des DSS1-Signalisierungsprotokolls können auch analoge Telekommunikationsendgeräte, z.B. mit Hilfe eines bekannten A/B-Wandlers, angesteuert werden.

Vorteilhaft ist es auch, im paketvermittelnden Kommunikationsnetz eine Signalisierungsnachricht mit Hilfe des H.225-Signalisierungsprotokoll-Standards zu übertragen. Dieser H.225-Standard ist in paketvermittelnden Kommunikationsnetzen verbreitet, wodurch sichergestellt ist, dass Teilnehmer des paketvermittelnden Kommunikationsnetzes Signalisierungsnachrichten des H.225-Standards verarbeiten und Schnittstellen zu anderen Kommunikationsnetzen, z.B. zu leitungsvermittelnden Kommunikationsnetzen, diese Signalisierungsdaten in Signalisierungsdaten des weiteren Kommunikationsnetzes umsetzen können. Bei einer anderen Ausführungsform der Erfindung ist die Schnittstelleneinheit in einer separaten Baueinheit angeordnet. Dadurch ist es möglich, verschiedene Kommunikationsendgeräte, insbesondere ein ISDN-Telefon, ein analoges Telefon, ein analoges Modem, ein ISDN-Modem und/oder ein analoges Faxgerät, z.B. mit Hilfe eines Steckverbinders, mit der separaten Schnittstellen-Baueinheit zu verbinden. Mit Hilfe einer weiteren Verbindung ist die separate Schnittstellen-Baueinheit mit dem paketvermittelnden Kommunikationsnetz verbunden. So lassen sich die Kommunikationsendgeräte und/oder Nebenstellenanlagen einfach mit dem paketvermittelnden Kommunikationsnetz verbinden.

Bei anderen Ausführungsformen ist die Schnittstelleneinheit eine Baugruppe der Telekommunikationseinheit. Durch die wahlweise Bestückung, z.B. eines ISDN-Telefons, mit einer solchen Schnittstellen-Baugruppe oder ohne eine solche Schnittstellen-Baugruppe kann einfach durch Installieren oder Nichtinstallieren dieser Schnittstellen-Baugruppe ein ISDN-Telefon oder ein IP-Telefon hergestellt werden. Die Produktionskosten für ein solches IP-Telefon sind dann relativ gering, da die bereits entwickelte Technik des ISDN-Telefons ohne weitere Änderungen zum Herstellen eines solchen IP-Telefons genutzt werden kann. Gleiches gilt für andere Telekommunikationsendgeräte und Nebenstellenanlagen.

Bei einer anderen Weiterbildung der Erfindung meldet eine Steuereinheit der Schnittstelleneinheit die Schnittstelleneinheit am paketvermittelnden Kommunikationsnetz automatisch an. Somit kann ohne weiteren Installations- und Konfigurationsaufwand ein bekanntes Telekommunikationsendgerät oder eine bekannten Nebenstellenanlage einfach an das paketvermittelnde Kommunikationsnetz ohne spezielle Fachkenntnisse angeschlossen und in Betrieb genommen werden. Der Anschluss erfolgt einfach durch das Verbinden der Schnittstelleneinheit bzw. der Telekommunikationseinrichtung mit integrierter Schnittstelleneinheit mit dem paketvermittelnden Kommunikationsnetz. Die Steuereinheit meldet anschließend den Teilnehmer am paketvermittelnden Kommunikationsnetz an. Das Telekommunikationsendgerät ist innerhalb weniger Minuten am paketvermittelnden Kommunikationsnetz angemeldet und betriebsbereit. Auch nach einer Unterbrechung der Stromversorgung der Schnittstelleneinheit oder nach einer erneuten Verbindung der Schnittstelleneinheit mit dem paketvermittelnden Kommunikationsnetz wird automatisch eine Verbindung zum paketvermittelnden Kommunikationsnetz aufgebaut und der Teilnehmer wird am paketvermittelnden Kommunikationsnetz angemeldet.

Vorteilhaft ist es auch, wenn bei der erfindungsgemäßen Anordnung des paketvermittelnde Kommunikationsnetz ein auf einem Internetprotokoll basierendes Netzwerk ist. Durch hohe Verfügbarkeit und Verbreitung von auf einem Internetprotokoll basierenden Netzwerken ist es besonders vorteilhaft, die erfindungsgemäße Anordnung zu nutzen, um Sprachverbindungen über ein solches Netzwerk herzustellen und dafür komfortable und kostengünstige Kommunikationsendgeräte zu nutzen, die auch an leitungsvermittelnden Kommunikationsnetzen einsetzbar sind. Auch können dadurch vorhandene Endgeräte weiterhin zur Kommunikation genutzt werden.

Mit einer Schnittstelleneinheit mit den Merkmalen des Anspruchs 1 ist es möglich, Kommunikationsendgeräte und Nebenstellenanlagen, die zum Anschluss an ein leitungsvermittelndes Kommunikationsnetz vorgesehen sind, einfach und kostengünstig an ein paketvermittelndes Kommunikationsnetz anzuschließen. Eine solche Schnittstelleneinheit ist endgeräteunabhängig, so dass an eine solche Schnittstelleneinheit, an die z.B. ISDN-Endgeräte anschließbar sind, bekannte bzw. vorhandene ISDN-Telefone, ISDN-Faxgeräte, ISDN-Modems, ISDN-Nebenstellenanlagen angeschlossen werden können. Analoge Endgeräte, wie z.B. analoge Telefone, analoge Faxgeräte, analoge Modems und analoge Telefonanlagen sind mit Hilfe eines A/B-Wandlers ebenfalls an die Schnittstelleneinheit für ISDN-Endgeräte anschließbar. Auch ist eine Schnittstelleneinheit mit den Merkmalen des Anspruchs 1 geeignet, um Nebenstellenanlagen an ein paketvermittelndes Kommunikationsnetz anzuschließen, die primär Multiplexanschluss benötigen. Bereits vorhandene Kommunikationsendgeräte und Nebenstellenanlagen können so einfach und kostengünstig an ein paketvermittelndes Kommunikationsnetz angeschlossen werden. Das Nutzen von gewohnten Sprachtelefoniediensten im paketvermittelnden Kommunikationsnetz erfolgt für den Teilnehmer in gewohnter Art und Weise, da übliche Kommunikationsendgeräte, insbesondere konventionelle Telefone, genutzt werden können.

Ein Kommunikationsendgerät mit den Merkmalen des Anspruchs 10 kann einfach mit Hilfe eines bekannten Kommunikationsendgerätes, das zum Anschluss an das leitungsvermittelnde Kommunikationsnetz geeignet ist, und einer Schnittstelleneinheit hergestellt werden. Die Entwicklungskosten für die Entwicklung eines solchen Kommunikationsendgerätes sind wesentlich geringer, als die Entwicklungskosten eines völlig neuen Kommunikationsendgerätes für paketvermittelnde Kommunikationsnetze. Bei einer Ausführung der Schnittstelleneinheit als Baugruppe des Kommunikationsendgerätes können weiterhin Kommunikationsendgeräte hergestellt werden, die wahlweise durch Installieren und Deinstallieren bzw. Aktivieren und Deaktivieren dieser Baugruppe als Kommunikationsendgeräte für leitungsvermittelnde Kommunikationsnetze und als Kommunikationsendgeräte für paketvermittelnde Kommunikationsnetze genutzt werden können.

Eine Nebenstellenanlage mit den Merkmalen des Anspruchs 10 ist einfach und kostengünstig herstellbar, da eine bekannte Nebenstellenanlage mit einer erfindungsgemäßen Schnittstelleneinheit ausgerüstet wird. Besonders vorteilhaft ist, wenn diese Schnittstelleneinheit eine Baugruppe der Nebenstellenanlage ist. Bekannte Nebenstellenanlagen zum Anschluss an ein leitungsvermittelndes Kommunikationsnetz können ohne weiteren Entwicklungsaufwand an ein paketvermittelndes Kommunikationsnetz angeschlossen werden. Ist die Schnittstelleneinheit eine Baugruppe der Nebenstellenanlage, so kann die Nebenstellenanlage durch Aktivieren und Deaktivieren dieser Baugruppe bzw. durch Installieren und Deinstallieren dieser Baugruppe wahlweise an ein leitungsvermittelndes Kommunikationsnetz oder an ein paketvermittelndes Kommunikationsnetz angeschlossen werden.

Weitere Merkmale und Vorteile der Erfindung ergeben sich aus der folgenden Beschreibung, welche in Verbindung mit den beigefügten Zeichnungen die Erfindung an Hand von Ausführungsbeispielen erläutert. Darin zeigen:
- Figur 1: das Prinzip der Datenübertragung zwischen einem paketvermittelnden Kommunikationsnetz und einer Kommunikationseinrichtung, die zum Anschluss an ein leitungsvermittelndes Kommunikationsnetz vorgesehen ist,
- Figur 2: eine Software-Architektur einer Schnittstelle zum Anschluss von Kommunikationsendgeräten, die zum Anschluss an ein leitungsvermittelndes Kommunikationsnetz vorgesehen sind, an ein paketvermittelndes Kommunikationsnetz,
- Figur 3: in einer schematischen Darstellung die Konvertierung von Signalisierungsnachrichten des paketvermittelnden Kommunikationsnetzes in Signalisierungsnachrichten des leitungsvermittelnden Kommunikationsnetzes und umgekehrt,
- Figur 4: eine Schnittstelleneinheit zum Anschluss eines ISDN-Endgerätes an ein paketvermittelndes Kommunikationsnetz,
- Figur 5: eine Schnittstelleneinheit zum Anschluss eines analogen Telefons an ein paketvermittelndes Kommunikationsnetz, und
- Figur 6: eine Schnittstelleneinheit zum Anschluss einer Nebenstellenanlage an ein paketvermittelndes Kommunikationsnetz.

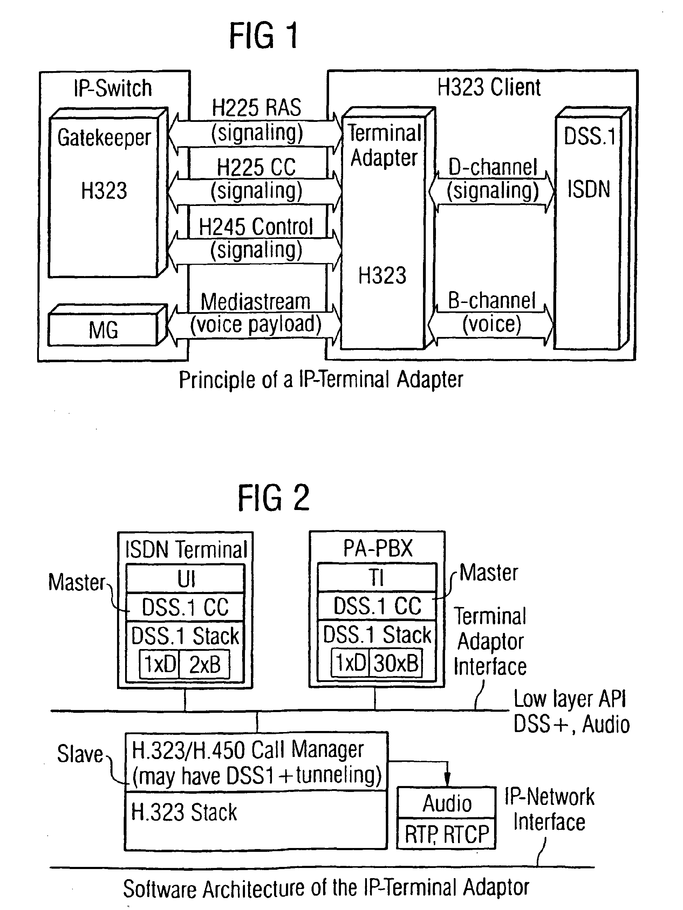

In Figur 1 ist eine Anordnung 10 zum Anschluss eines auf dem DSS1-ISDN-Protokoll basierenden Kommunikationsendgerätes 18 an ein auf einem Internetprotokoll basierenden Netz dargestellt. Das auf dem Internetprotokoll basierende Netz, kurz IP-Netz, ist ein paketvermittelndes Kommunikations- bzw. Datennetz, wie z.B. das Internet. Ein Netzknoten 12, der als IP-Switch ausgeführt ist, ist Teil des IP-Netzes. Der Netzknoten 12 hat einen Gatekeeper 14 und einen Mediagateway 16 gemäß dem H.323-Standard. Mit Hilfe des Gatekeepers und des Mediagateways sind Teilnehmer des IP-Netzes mit diesem IP-Netz verbindbar. Diese Teilnehmer werden auch als H.323-Teilnehmer 18 oder als H.323-Clients bezeichnet. Der H.323-Teilnehmer 18 enthält eine Schnittstelleneinheit 22 und ein bekanntes ISDN-Endgerät 20. Die Verbindung zwischen der Schnittstelleneinheit 22, die auch als Terminal-Adapter bezeichnet wird, besteht aus einem sogenannten D-Kanal 24 zum Übertragen von Signalisierungsinformationen und mindestens einem sogenannten B-Kanal 26 zum Übertragen von Nutzdaten, z.B. von Sprachdaten. Weiterhin werden Signalisierungsdaten zwischen der Schnittstelleneinheit 22 und dem Gatekeeper 14 mit Hilfe von H.225-Registrierungs-, Verwaltungs- und Status-Signalisierungsinformationen 28 übertragen. H.225-Signalisierungsinformationen 30 zur Verbindungssteuerung und H.245 Steuer- und Meldungsdaten 32 werden ebenfalls zwischen der Schnittstelleneinheit 22 und dem Gatekeeper 14 ausgetauscht.

Die Nutzdaten 34 werden als Nutzdatenstrom, dem sogenannten Mediastream, zwischen dem Mediagateway 16 und der Schnittstelle 22 übertragen. Die Signalisierungsdaten 28, 30, 32 schließen insbesondere Signalisierungsinformationen für weitere Dienst- bzw. Leitungsmerkmale, insbesondere für Sprachverbindungen mit ein, die z.B. im Standard H.245 festgelegt sind. Weitere Signalisierungsdaten werden von einem mit dem paketvermittelnden Kommunikationsnetz verbundenen leitungsvermittelnden Kommunikationsnetz in Form von Daten übertragen, die nicht gemäß einem Signalisierungsdatenstandard standardisiert sind. Dabei können die Daten z.B. zwischen zwei Endgeräten, wie zwischen dem Endgerät 20 und einem weiteren Endgerät, ausgetauscht werden, indem diese Daten direkt zwischen den Endgeräten ausgetauscht werden, was als Datenübertragung nach dem Tunnelprinzip bezeichnet wird. Es besteht aber auch die Möglichkeit, dass an einer Schnittstelle zwischen einem leitungsvermittelnden Kommunikationsnetz und dem IP-Netz Signalisierungsdaten des leitungsvermittelnden Kommunikationsnetzes in vereinbarte Signalisierungsdaten gewandelt werden, die von der Schnittstelleneinheit 22 in DSS1-Signalisierungsinformationen gewandelt werden. Damit erhält der Teilnehmer, der mit Hilfe des Kommunikationsendgerätes 20 eine Verbindung zu einem Teilnehmer eines leitungsvermittelnden Kommunikationsnetzes aufbaut, den vollen Dienst- und Funktionsumfang des leitungsvermittelnden Kommunikationsnetzes und kann somit alle bekannten Dienst- und Leitungsmerkmale nutzen. Die Schnittstelleneinheit 22 überträgt die vom Mediagateway 16 erhaltenen Nutzdaten 34 mit Hilfe des B-Kanal-Protokolls 26 zum Endgerät 20. Die Funktion des H.323-Gatekeepers 14, des Mediagateways 16, des H.323, H.450, H.225, H.245 sowie des DSS1-Protokolls sind in der Beschreibungseinleitung bereits erläutert worden. Weiterführend ist auf die entsprechenden Standards der ITU und ihrem Gremium ITU-T verwiesen.

In Figur 2 ist eine Software-Architektur der Schnittstelleneinheit 22 sowie eines ISDN-Endgerät 20a und einer ISDN-Nebenstellenanlage 20b dargestellt. Gleiche Elemente haben gleiche Bezugszeichen. Die Schnittstelleneinheit 22 hat ein H.323-Protokollstapel 38, der auch als H.323-Stack bezeichnet wird, und eine H.323/H.450-Verbindungssteuerung 36. Mit Hilfe einer Schnittstelle 40 zum IP-Netz werden dem H.323- Protokollstapel Signalisierungsdaten zugeführt. Die Verbindungssteuerung 36 erhält weiterhin Nutzdaten 50, die mit Hilfe eines Echtzeitprotokolls (RTP) sowie eines Echtzeitsteuerprotokolls (RTCP) übertragen werden. Auch können weitere Signalisierungsinformationen, z.B. Signalisierungsinformationen des DSS1-Signalisierungsprotokolls, mit Hilfe von Datenpaketen nach dem Tunnelprinzip übertragen werden, bei dem Signalisierungsinformationen in Form von Nutzdaten von Gerät zu Gerät (end-to-end) übertragen werden. Die Verbindungssteuerung 36 schließt die Protokolle ab, mit denen die Signalisierungsdaten und die Nutzdaten vom IP-Netz übertragen wurden, und wandelt die empfangenen Daten in Signalisierungs- und Nutzdaten gemäß dem DSS1-Protokoll. Somit verhält sich die Schnittstelleneinheit 22 gegenüber dem IP-Netz wie ein H.323-Endgerät.

An die Schnittstelleneinheit 22 kann sowohl das ISDN-Endgerät 20a als auch die Nebenstellenanlage 20b angeschlossen werden. Die Verbindungssteuerung 36 übergibt die Signalisierungsdaten mit Hilfe des D-Kanals 24 und die Nutzdaten mit Hilfe mindestens eines B-Kanals einem DSS1-Register 40a, 40b des DSS1-Endgerätes 20a, 20b. Übliche ISDN-Endgeräte 20a, wie z.B. ein ISDN-Telefon, sind mit zwei B-Kanälen und einem D-Kanal, z.B. über eine S0-Schnittstelle, mit der Verbindungssteuerung 36 verbunden. Die ISDN-Nebenstellenanlage 20b ist ebenfalls mit einem D-Kanal und mit mehreren B-Kanälen mit der Verbindungssteuerung 36 verbunden. Das können z.B. 30 B-Kanäle sein. Die Verbindungssteuerung 36 stellt den Endgeräten 20a, 20b mit Hilfe der Signalisierungs- und Nutzkanäle eine Anwendungsprogrammschnittstelle zur Verfügung. Das ISDN-Endgerät 20a hat ein DSS1-Register 44a, eine DSS1-Verbindungssteuerung 46a und eine Benutzerebene 48a. Die ISDN-Nebenstellenanlage 20b hat ein DSS1-Register 44b, eine DSS1-Verbindungssteuerung 46b und eine Benutzerebene 48b. Die Verbindungssteuerungen 46a, 46b der Kommunikationsgeräte 20a, 20b dienen zum Aufbau von Verbindungen und hat gegenüber der Verbindungssteuerung 36 der Schnittstelleneinheit 22 die Funktion eines Masters. Die Verbindungssteuereinheit 36 der Schnittstelleneinheit 22 hat somit die Funktion eines Slaves gegenüber den Kommunikationsgeräten 20a, 20b.

Die Benutzerebene 48a, 48b dient vor allem zur Aufbereitung der Signalisierungs- und Nutzdaten, insbesondere zur Ansteuerung von Ein- und Ausgabeeinheiten der Kommunikationsgeräte 20a, 20b. Die Benutzerebene 48b der Nebenstellenanlage 20b dient weiterhin zur Steuerung von Funktionen, die zwischen Telekommunikationsendeinrichtungen möglich sind, die an diese Nebenstellenanlage 20b angeschlossen sind. Die Schnittstelleneinheit 22 ist in zwei Betriebsarten betreibbar. In der ersten Betriebsart werden nur die im H.323/H.245-Signalisierungsprotokoll vorhandenen Signalisierungsnachrichten in äquivalente Signalisierungsnachrichten des DSS1-Protokolls konvertiert und umgekehrt. In der zweiten Betriebsart werden neben den H.323/H.245-Signalisierungsnachrichten auch die nach dem Tunnelprinzip übertragenen DSS1-Signalisierungsnachrichten verarbeitet und als DSS1-Signalisierungsnachrichten dem jeweiligen Kommunikationsgerät 20a, 20b übergeben. Die mit Hilfe des IP-Netzes übertragenen Signalisierungsinformationen werden dem H.323-Protokollstapel von einer IP-Netz-Verbindungsbaugruppe, z.B. von einer ETHERNET-Schnittstellenkarte (nicht dargestellt), in Form von Daten übergeben. Diese IP-Netz-Verbindungsbaugruppe übergibt der Verbindungssteuerung 36 ebenfalls die Nutzdaten.

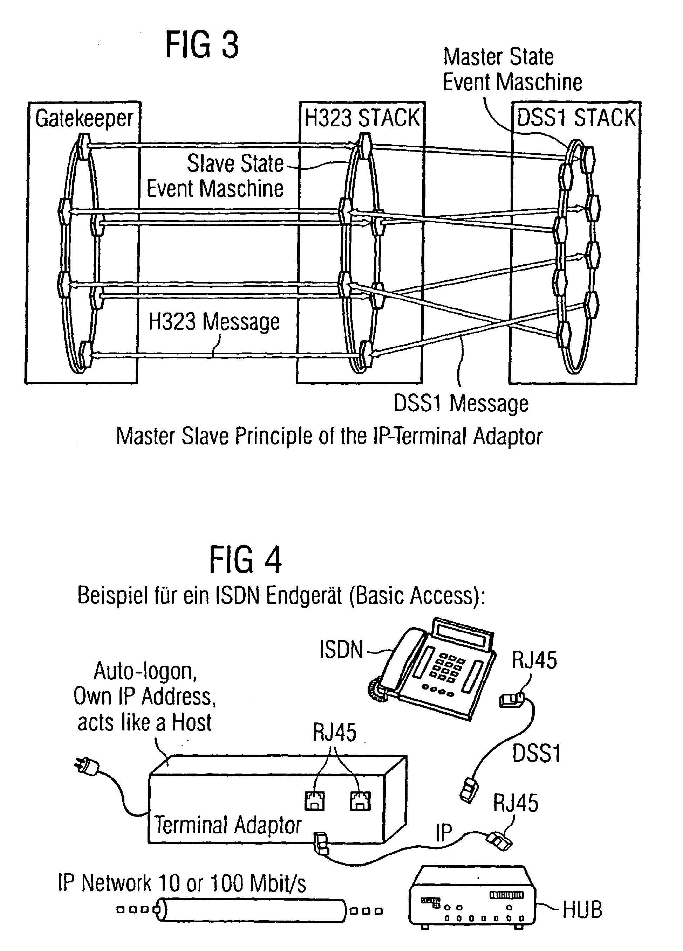

Figur 3 zeigt das Master-Slave-Prinzip der Schnittstelleneinheit 22. Dieses Prinzip ist mit Hilfe von Zustands-Anreizmaschinen (State Event Maschine) verdeutlicht. Eine Signalisierungsinformation A, die über das IP-Netz zum Gatekeeper 14 für den Teilnehmeranschluss übertragen worden ist, wird dem H.323-Register der Schnittstelleneinheit 22 übergeben. Die Signalisierungsinformation A ist eine Signalisierungsinformation gemäß dem H.323-Standard. Die Schnittstelleneinheit 22 konvertiert die Signalisierungsinformation A in eine äquivalente Signalisierungsinformation A' im DSS1-Standard und übergibt sie dem DSS1-Register der Schnittstelleneinheit 22. Die Signalisierungsnachricht A' wird von dem DSS1-Register der Schnittstelleneinheit 22 zu einem DSS1-Register 44a, 44b des Kommunikationsgerätes 20a, 20b übertragen. In gleicher Weise wird mit den Signalisierungsnachrichten B und C verfahren, die mit Hilfe des IP-Netzes zum Teilnehmeranschluss übertragen werden.

Signalisierungsnachrichten, die vom Kommunikationsgerätes 20a, 20b zum IP-Netz übertragen werden sollen, werden dem DSS1-Register der Schnittstelleneinheit 22 zugeführt. Eine solche Nachricht ist z.B. die Signalisierungsnachricht D'. Die Schnittstelleneinheit 22 konvertiert die DSS1-Signalisierungsnachricht D' in eine H.323-Signalisierungsnachricht D und übergibt sie dem H.323-Register der Schnittstelleneinheit 22. Die Signalisierungsnachricht D wird vom H.323-Register der Schnittstelleneinheit 22 zum H.323-Register des Gatekeepers 14 übertragen. In gleicher Weise wird mit den DSS1-Signalisierungsnachrichten E' und F' verfahren, die von der Schnittstelleneinheit 22 in H.323-Signalisierungsnachrichten E und F umgewandelt werden. Das H.323-Register der Schnittstelleneinheit 22 schließt das Datenübertragungsprotokoll zwischen dem Gatekeeper 14 und der Schnittstelleneinheit 22 ab und verhält sich gegenüber dem Gatekeeper 14 wie ein H.323-Endgerät. Das DSS1-Register der Schnittstelleneinheit 22 schließt das DSS1-Protokoll zu der Kommunikationsendeinrichtung 20a, 20b ab und verhält sich gegenüber dieser ISDN-Endeinrichtung 20a, 20b wie ein leitungsvermittelndes Kommunikationsnetz, das auf einem DSS1-Protokoll basiert. Weiterhin generiert die Schnittstelle 22 für H.323-Signalisierungsnachrichten, die eine Rückmeldung des H.323-Endgerätes erfordern, eine solche Rückmeldung.

Ebenfalls erzeugt die Schnittstelleneinheit 22 für Signalisierungsinformationen des ISDN-Endgerätes 20a, 20b, die eine Rückmeldung des DSS1-Kommunikationsnetzes erfordern, eine solche Rückmeldung. Die Zuordnung, d.h. das Konvertieren, von H.323-Signalisierungsinformationen zu DSS1-Signalisierungsinformationen kann in der Schnittstelleneinheit 22 z.B. mit Hilfe einer Datenbank erfolgen, in der eine Zuordnung von äquivalenten H.323- und DSS1-Signalisierungsnachrichten enthalten ist. Weitere Signalisierungsnachrichten können der Schnittstelleneinheit vom Gatekeeper 14 in Form von Datenpaketen zugeführt werden, die weitere DSS1-Signalisierungsinformationen enthalten, die von dem H.323/H.245-Standard nicht unterstützt werden. Somit können dem ISDN-Kommunikationsgerät 20a, 20b auch solche Signalisierungsinformationen zugeführt werden, die Dienst- und Leistungsmerkmale steuern, die vom H.323/H.245-Standard nicht unterstützt werden.

Das Konvertieren der H.323-Signalisierungsinformationen in DSS1-Signalisierungsinformationen und umgekehrt kann wie bereits erwähnt mit Hilfe einer Datenbank erfolgen, die als Transaktionsregister dient. Das Umsetzen der Signalisierungsinformationen erfolgt somit auf einer logischen Ebene. Kann z.B. der Signalisierungsnachricht F' des DDS1-Registers keine äquivalente Signalisierungsnachricht F des H.323-Registers zugeordnet werden, so wird diese DSS1-Signalisierungsnachricht mit Hilfe eines dafür vorgesehenen Datenbereichs eines H.323-Signalisierungspaketes übertragen, der die DSS1-Signalisierungsnachricht F' enthält. Diese Signalisierungsnachricht F' wird zu einer Schnittstelle zwischen dem IP-Netz und einem leitungsvermittelnden Kommunikationsnetz übertragen. Diese Schnittstelle kann z.B. ein Gateway sein. Das leitungsvermittelnde Kommunikationsnetz verwendet ebenfalls DSS1-Signalisierungsnachrichten zur Signalisierung. An der Schnittstelle zwischen dem IP-Netz und diesem leitungsvermittelnden Kommunikationsnetz wird die DSS1-Signalisierungsnachricht F', die in der H.323-Signalisierungsnachricht F enthalten ist, dem leitungsvermittelnden Kommunikationsnetz zugeführt. Ebenso können DSS1-Signalisierungsnachrichten von dem leitungsvermittelnden Kommunikationsnetz zu dem Kommunikationsgerät 20a, 20b mit Hilfe von H.323-Signalisierungsnachrichten übertragen werden. Dieses Übertragungsprinzip kann auch zur Übertragung von DSS1-Signalisierungsnachrichten, die nicht in H.323-Signalisierungsnachrichten konvertiert werden können, von einem leitungsvermittelnden Kommunikationsnetz zur Schnittstelleneinheit 22 genutzt werden, wobei die Schnittstelleneinheit 22 diese DSS1-Signalisierungsnachrichten dem Kommunikationsgerät 20a, 20b zuführt.

In Figur 4 ist eine Schnittstelleneinheit 22 dargestellt, die ein ISDN-Telefon 20a mit einem IP-Netz 58 verbindet. Die Schnittstelleneinheit 22 ist mit einem Verbindungskabel 54 mit einem Netzwerkverteiler 56 verbunden, der auch als HUB bezeichnet wird. Der Netzwerkverteiler 56 ist mit dem IP-Netz 58 verbunden. Mit Hilfe eines Stromversorgungskabels 60 ist die Schnittstelleneinheit 22 mit einer Stromversorgung, z.B. mit dem öffentlichen Stromnetz, verbunden. Das ISDN-Telefon 20a ist mit Hilfe eines Verbindungskabels 52 mit der Schnittstelleneinheit 22 verbunden. Die Verbindung zwischen ISDN-Telefon 20a und Schnittstelleneinheit 22 erfolgt z.B. mit Hilfe der standardisierten S0-Schnittstelle, die zum Anschluss von ISDN-Telefonen mit DSS1-Signalisierungsprotokoll genutzt wird.

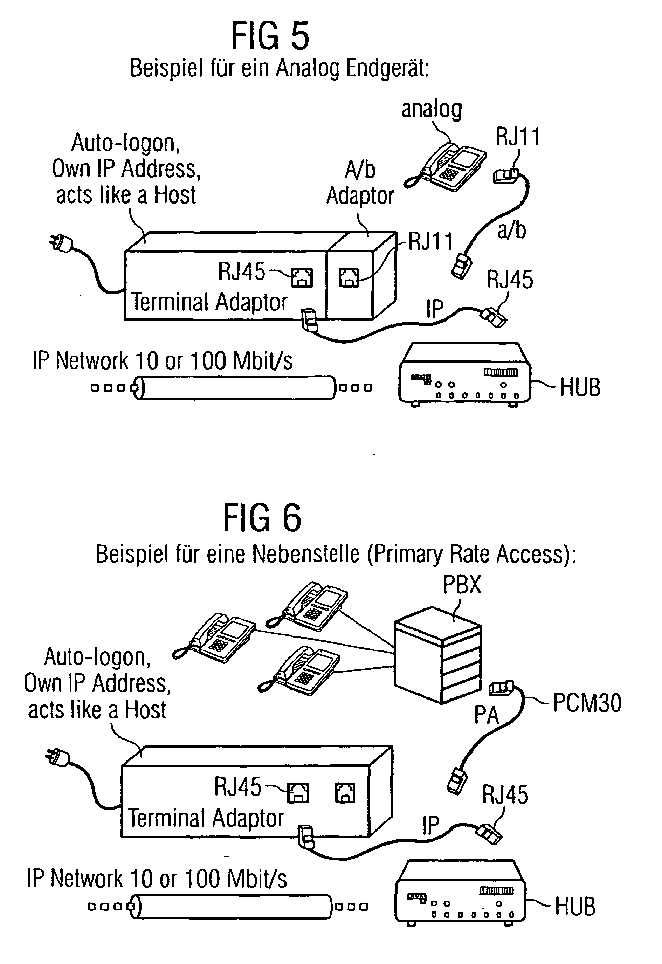

In Figur 5 ist eine weitere Schnittstelleneinheit 62 zum Anschluss eines analogen Telefons an ein IP-Netz 58 dargestellt. Die Schnittstelleneinheit 62 ist ähnlich wie die Schnittstelleneinheit 22 aufgebaut und hat eine Verbindung 54 zu einem Netzwerkverteiler 56, der mit dem IP-Netz 58 verbunden ist. Weiterhin hat die Schnittstelleneinheit 62 ein Verbindungskabel 60 zu einer nicht dargestellten Stromversorgung. Im Gegensatz zur Schnittstelleneinheit 22 hat die Schnittstelleneinheit 62 eine A/B-Schnittstelle, mit deren Hilfe die DSS1-Signalisierungsinformationen analogen Endgeräten zugeführt werden. Die Verbindung zwischen analogem Telefon 66 und der Schnittstelleneinheit 62 erfolgt mit Hilfe eines Verbindungskabels 64.

In Figur 6 ist eine Schnittstelleneinheit 70 dargestellt, die ähnlich wie die Schnittstelleneinheiten 22 und 62 aufgebaut ist und ebenfalls wie diese Schnittstelleneinheiten 22, 62 mit einem Netzwerkverteiler 56 über ein Verbindungskabel 54 verbunden ist. Die Schnittstelleneinheit 70 hat mit Hilfe des Netzwerkverteilers 56 einen Zugang zum IP-Netz 58. Die Schnittstelleneinheit 70 dient zum Anschluss einer Nebenstellenanlage 20b, an die mehrere Kommunikationsendgeräte, wie z.B. die Telefone 72, 74, 76 angeschlossen sind. Die Verbindung zwischen Schnittstelleneinheit 70 und Nebenstellenanlage 20b erfolgt mit Hilfe einer PCM30-Strecke. Mit Hilfe einer solchen PCM-Strecke können Daten z.B. mit Hilfe von 30 Nutzdatenkanäle sowie mit Hilfe eines Signalisierungskanals übertragen werden, die beispielsweise jeweils eine Datenübertragungskapazität von 64 kbit/s haben.

Die Schnittstelleneinheiten 22, 62, 70 melden sich bei einer vorhandenen Netzwerkverbindung zum IP-Netz 58 automatisch mit einer voreingestellten Teilnehmeradresse, der sogenannten IP-Adresse am IP-Netz an, wenn die Stromversorgung der Schnittstelleneinheit 22, 62, 70 aktiviert ist. Durch das automatische Anmelden entfällt bei voreingestellter IP-Adresse weiterer Installationsaufwand. Die Verbindungen zur Stromversorgung, zum IP-Netz über den Netzwerkverteiler 56 und zur Nebenstellenanlage 20b, zum ISDN-Telefon 20a und zum analogen Telefon 66 können auch von Personen hergestellt werden, die keine Telekommunikationsfachkräfte sind. Vorhandene ISDN-und/oder analoge Endgeräte können mit dem gleichen Funktionsumfang wie bei einem direkten Anschluss an leitungsvermittelnde Kommunikationsnetze genutzt werden. Somit bleibt der Bedienkomfort auch beim Nutzen von Sprachverbindungen über ein IP-Netz voll erhalten. Teilnehmer können mit Hilfe der Kommunikationsendgeräte 20a, 66, 72, 74, 76 Sprach- und Datenverbindungen zu beliebigen Teilnehmern in IP-Netzen oder in leitungsvermittelnden Kommunikationsnetzen herstellen.

Auch lassen sich die bekannten Dienst- und Leistungsmerkmale, wie z.B. bekannte ISDN-Leistungsmerkmale, weiterhin nutzen. Dies betrifft insbesondere Dienstmerkmale, wie Rufübernahme, Dreierkonferenz, große Konferenz, Halten, Anzeige von Gebühreninformationen, geschlossene Benutzergruppe, Rufnummernidentifikationen, automatischer Rückruf bei besetzt, automatischer Rückruf bei keine Antwort, Rufsperren, Integration von wartenden Nachrichten und Anrufweiterleitungen. Die Schnittstelleneinheiten 22, 62, 70 übertragen jedoch nicht nur die Signalisierungsnachrichten, die mit Hilfe des IP-Netzes 58 übertragen werden, sondern auch Nutzdaten, z.B. Sprachdaten, die mit Hilfe des IP-Netzes übertragen werden. Die Schnittstelleneinheiten 22, 62, 70 können jedoch auch als Baugruppe des ISDN-Telefons 20a, des analogen Telefons 66 oder der Nebenstellenanlage 20b ausgeführt sein.

Mit Hilfe einer Schnittstelleneinheit 22, 62, 70 können auch Signalisierungsnachrichten mit Hilfe von anderen Netzwerkprotokollen, wie z.B. dem SIP-Protokoll in Signalisierungsnachrichten des DSS1-Protokolls oder eines anderen Signalisierungsprotokolls nach dem gleichen Prinzip umgewandelt werden. Dazu muss nur die Datenbank der Schnittstelleneinheit 22, 62, 70 und die Steuerung des Netzwerkprotokolls angepasst werden. Bei einer Umsetzung von anderen Protokollen kann es aber vorkommen, dass nicht alle Leistungsmerkmale, wie sie bei ISDN bekannt sind, umgesetzt werden können. Die Schnittstelleneinheit fungiert beim H.323-Signalisierungsprotokoll wie auch bei anderen Signalisierungsprotokollen gegenüber dem IP-Netz 58 wie ein IP-Terminal und wird deshalb auch als virtuelles Terminal bezeichnet.

## Patentansprüche

1. Schnittstelleneinheit (22, 62, 70) einer Telekommunikationseinrichtung (20, 20b), die an ein leitungsvermittelnden Kommunikationsnetz anschließbar ist, für ein System mit
- einem paketvermittelnden Kommunikationsnetz (40, 58),
- ersten Signalisierungsdaten (A-F), die gemäß einem Signalisierungsstandard des paketvermittelnden Kommunikationsnetzes ausgebildet sind,
- zweiten Signalisierungsdaten (A'-F'), die gemäß einem Signalisierungsstandard des leitungsvermittelnden Kommunikationsnetzes ausgebildet sind,
die Schnittstelleneinheit umfassend Mittel:
(a) zum Anschluss an das paketvermittelnde Kommunikationsnetz;
(b) zur Verbindung mit der Telekommunikationseinrichtung;
(c) zur Wandlung mindestens eines Teils der mit Hilfe des paketvermittelnden Kommunikationsnetzes übertragenen und für die Telekommunikationseinrichtung bestimmten ersten Signalisierungsdaten in die zweiten Signalisierungsdaten (A' bis F') und umgekehrt,
wobei in dem paketvermittelnden Kommunikationsnetz anstelle der ersten Signalisierungsdaten die zweiten Signalisierungsdaten übertragen werden, wenn die zweiten Signalisierungsdaten nicht in die ersten Signalisierungsdaten gewandelt werden können;
(d) zur Zuführung der Signalisierungsdaten zu der Telekommunikationseinrichtung und umgekehrt.

2. Schnittstelleneinheit nach Anspruch 1,
umfassend Mittel zum Erzeugen von Meldungen, die das paketvermittelnde Kommunikationsnetz und/oder das leitungsvermittelnde Kommunikationsnetz als Rückmeldung auf übermittelte Signalisierungsdaten benötigt.

3. Schnittstelleneinheit nach einem der Ansprüche 1-2,
bei der die Telekommunikationseinrichtung ein ISDN-Telefon, ein analoges Telefon, ein analoges Modem, ein ISDN-Modem, ein analoges Faxgerät und/oder eine Nebenstellenanlage (20b) ist.

4. Schnittstelleneinheit nach einem der Ansprüche 1-3,
ausgebildet als separate Baueinheit, die insbesondere als Baugruppe in der Telekommunikationseinheit angeordnet ist.

5. Schnittstelleneinheit nach einem der Ansprüche 1-4, umfassend eine Steuereinheit zur automatischen Anmeldung der Schnittstelleneinheit als Teilnehmer am paketvermittelnden Kommunikationsnetz.

6. Schnittstelleneinheit nach einem der Ansprüche 1-5,
mit Signalisierungsdaten, in denen Signalisierungsnachrichten enthalten sind.

7. Schnittstelleneinheit nach Anspruch 6,
bei der die Wandlung mit Hilfe von äquivalenten Signalisierungsnachrichten erfolgt, die vorzugsweies in einer Datenbank gespeichert sind.

8. Schnittstelleneinheit nach Anspruch 7,
bei der zweite Signalisierungsnachrichten (F) des leitungsvermittelnden Kommunikationsnetzes, denen keine äquivalente erste Signalisierungsnachricht (F') des paketvermittelnden Kommunikationsnetzes zugeordnet ist, mit Hilfe eines Datenpaketes - insbesondere als dessen Nutzdaten - übertragen werden.

9. Schnittstelleneinheit nach einem der Ansprüche 6-8,
bei der die ersten Signalisierungsnachrichten gemäß dem ITU-Standards H.225 und die zweiten Signalisierungsnachrichten gemäß den ITU-Standards Q.931 und Q.932 ausgebildet sind.

10. Kommunikationsendgerät oder Nebenstellenanlage, umfassend eine Schnittstelleneinheit nach einem der vorstehenden Ansprüche.

## Claims

1. Interface unit (22, 62, 70) of a telecommunications device (20, 20b), which is able to be connected to a circuit-switching communications network, for a system with
- a packet-switching communications network (40, 58),
- first signalling data (A-F), which is embodied in accordance with a signalling standard of the packet-switching communications network,
- second signalling data (A'-F'), which is embodied in accordance with a signalling standard of the circuit-switching communications network,
the interface unit comprising means:
(a) for connection to the packet-switching communications network;
(b) for connection to the telecommunications device;
(c) for conversion of at least a part of the first signalling data transmitted with the aid of the packet-switching communications network and destined for the telecommunications device into the second signalling data (A' to F') and vice-versa,
whereby, in the packet-switching communications network, instead of the first signalling data the second signalling data is transmitted if the second signalling data cannot be converted into the first signalling data;
(d) for routing the signalling data to the telecommunications device and vice versa.

2. Interface unit according to claim 1,
comprising a means for creating messages which the packet-switching communications network and/or the circuit switching communications network need as a response message to transferred signalling data.

3. Interface unit according to one of the claims 1-2, in which the telecommunications device is an ISDN telephone, an analogue telephone, an analogue modem, an ISDN modem, an analogue fax device and/or a private branch exchange (20b).

4. Interface unit according to one of the claims 1-3, embodied as a separate hardware unit which is especially arranged as a module in the telecommunications unit.

5. Interface unit according to one of the claims 1-4, comprising a control unit for automatic logging on of the interface unit as a user at the packet-switching communications network.

6. Interface unit according to one of the claims 1-5, with signalling data in which signalling messages are contained.

7. Interface unit according to claim 6,
in which the conversion is undertaken with the aid of equivalent signalling messages which are preferably stored in a database.

8. Interface unit according to claim 7,
in which the second signalling message (F) of the circuit switched communications network to which no equivalent first signalling message (F') of the packet-switching communications network is assigned, is transmitted with the aid of a data packet - especially as its payload data.

9. Interface unit according to the one of the claims 6-8, in which the first signalling messages are embodied according to the ITU Standard H.225 and the second signalling messages according to the ITU Standards Q.931 and Q.932.

10. Communication terminal or private branch exchange comprising an interface unit according to one of the previous claims.

## Revendications

1. Unité d'interface (22, 62, 70) d'un dispositif de télécommunication (20, 20b) connectable à un réseau de communication à commutation de circuits, pour un système comprenant
- un réseau de communication à commutation de paquets (40, 58),
- des premières données de signalisation (A-F), configurées selon un standard de signalisation du réseau de communication à commutation de paquets,
- des deuxièmes données de signalisation (A'-F'), configurées selon un standard de signalisation du réseau de communication à commutation de circuits,
ladite unité d'interface comprenant des moyens :
(a) permettant la connexion audit réseau de communication à commutation de paquets ;
(b) permettant la liaison avec ledit dispositif de télécommunication ;
(c) permettant la conversion d'au moins une partie desdites premières données de signalisation, transmises à l'aide du réseau de communication à commutation de paquets et destinées au dispositif de télécommunication, en lesdites deuxièmes données de signalisation (A' à F'), et vice versa,
dans ledit réseau de communication à commutation de paquets, les deuxièmes données de signalisation étant transmises à la place des premières données de signalisation si lesdites deuxièmes données de signalisation ne peuvent être converties en lesdites premières données de signalisation ;
(d) permettant l'acheminement des données de signalisation au dispositif de télécommunication, et vice versa.

2. Unité d'interface selon la revendication 1,
comprenant des moyens permettant de générer des messages dont le réseau de communication à commutation de paquets et/ou le réseau de communication à commutation de circuits a besoin comme message de retour aux données de signalisation transmises.

3. Unité d'interface selon l'une des revendications 1-2,
dans laquelle le dispositif de télécommunication est un téléphone ISDN, un téléphone analogique, un modem analogique, un modem ISDN, un appareil fax analogique et/ou une installation d'abonné à postes supplémentaires (20b).

4. Unité d'interface selon l'une des revendications 1-3,
conçue en tant que composant séparé, et qui est disposée notamment en tant qu'ensemble dans l'unité de télécommunication.

5. Unité d'interface selon l'une des revendications 1-4,
comprenant une unité de commande permettant l'inscription automatique de l'unité d'interface comme abonné du réseau de communication à commutation de paquets.

6. Unité d'interface selon l'une des revendications 1-5,
comprenant des données de signalisation dans lesquelles sont contenus des messages de signalisation.

7. Unité d'interface selon la revendication 6,
dans laquelle la conversion s'effectue à l'aide de messages de signalisation équivalents, stockés de préférence dans une banque de données.

8. Unité d'interface selon la revendication 7,
dans laquelle des deuxièmes messages de signalisation (F) du réseau de communication à commutation de circuits, auxquels aucun premier message de signalisation équivalent (F') du réseau de communication à commutation de paquets n'est associé, sont transmis à l'aide d'un paquet de données, en particulier en tant que données utiles de celui-ci.

9. Unité d'interface selon l'une des revendications 6-8,
dans laquelle les premiers messages de signalisation sont configurés selon le standard H.225 de l'ITU et les deuxièmes messages de signalisation selon les standards Q.931 et Q.932 de l'ITU.

10. Terminal de communication ou installation d'abonné à postes supplémentaires, comprenant une unité d'interface selon l'une des revendications précédentes.
